# EUROPEAN PATENT APPLICATION

(11) **EP 4 787 309 A1**
(43) Date of publication of application: **05.08.2026**
(21) Application number: 24871808.2
(22) Date of filing: 09.09.2024
(51) Int. Cl.: G06T 7/571, H04N 23/60

(54) **INFORMATION PROCESSING SYSTEM, THREE-DIMENSIONAL MODEL GENERATION DEVICE, OPTICAL DEVICE, INFORMATION PROCESSING METHOD, AND PROGRAM**

(30) Priority: 28.09.2023 JP 2023168481
(71) Applicant: FUJIFILM Corporation, Tokyo 106-8620 (JP)
(72) Inventor: KOBAYASHI, Toshiki, Saitama-shi, Saitama 3319624 (JP); TANAKA, Koichi, Saitama-shi, Saitama 3319624 (JP); FUJIMOTO, Shinichi, Saitama-shi, Saitama 3319624 (JP); ISHIDA, Kazuki, Saitama-shi, Saitama 3319624 (JP)
(74) Representative: Dehns Germany Partnerschaft mbB
(86) International application number: PCT/JP2024/032179
(87) International publication number: WO 2025/070010

(57) **Abstract**

Provided are an information processing system, a three-dimensional model generation device, an optical device, an information processing method, and a program that can provide a good 3D model. An information processing system comprising: one or more processors, in which the one or more processors are configured to: acquire two or more images having different focusing positions for each of a plurality of imaging directions of an object; generate a depth-of-field composite image by combining the images having different focusing positions acquired from the same imaging direction; and generate a 3D model of at least a part of the object based on the depth-of-field composite image obtained for each imaging direction.

## Description

### BACKGROUND OF THE INVENTION

### 1. Field of the Invention

The present invention relates to an information processing system, a three-dimensional model generation device, an optical device, an information processing method, and a program for generating a 3D model.

### 2. Description of the Related Art

JP2020-527814A discloses a method for generating a 3D view of an object, the method comprising capturing image data from a plurality of viewpoints around the object, analyzing the image data for quality, creating a dataset of images based on the image data, filtering the dataset of images, generating a data reference parameter, and uploading the dataset of images to a server via a network.

### SUMMARY OF THE INVENTION

One embodiment according to the technology of the present disclosure provides an information processing system, a three-dimensional model generation device, an optical device, an information processing method, and a program that can provide a good 3D model.

A first aspect relates to an information processing system comprising one or more processors, in which the one or more processors are configured to acquire two or more images having different focusing positions for each of a plurality of imaging directions of an object, generate a depth-of-field composite image by combining the images having different focusing positions acquired from the same imaging direction, and generate a 3D model of at least a part of the object based on the depth-of-field composite image obtained for each imaging direction.

A second aspect relates to the information processing system according to the first aspect, in which the one or more processors are configured to determine whether to apply the image to the generation of the 3D model.

A third aspect relates to the information processing system according to the first or second aspect, in which the one or more processors are configured to determine whether to apply the image to the generation of the depth-of-field composite image.

A fourth aspect relates to the information processing system according to any one of the first to third aspects, in which the one or more processors are configured to determine whether to apply the depth-of-field composite image to the generation of the 3D model.

A fifth aspect relates to the information processing system according to any one of the second to fourth aspects, in which the one or more processors are configured to perform image evaluation for determining whether to apply the image.

A sixth aspect relates to the information processing system according to the fifth aspect, in which the one or more processors are configured to instruct re-imaging of the image based on a result of the image evaluation or the determination of whether to apply the image.

A seventh aspect relates to the information processing system according to any one of the first to sixth aspects, in which the one or more processors are configured to determine a condition for acquiring the images having different focusing positions of the object.

An eighth aspect relates to the information processing system according to the seventh aspect, in which the one or more processors are configured to determine the condition based on a pre-image obtained by imaging the object before the image is captured.

A ninth aspect relates to the information processing system according to the eighth aspect, in which the one or more processors are configured to obtain a width of the object based on the pre-image and determine the condition based on the width.

A tenth aspect relates to the information processing system according to the eighth aspect, in which the one or more processors are configured to obtain a pre-3D model of the object based on the pre-image and determine the condition based on the pre-3D model.

An eleventh aspect relates to the information processing system according to the tenth aspect, in which the one or more processors are configured to generate the pre-3D model by a volume intersection method.

A twelfth aspect relates to the information processing system according to the seventh aspect, in which the one or more processors are configured to calculate an imaging coverage of a target region with respect to the object for each imaging direction, and determine the condition based on a calculation result.

A thirteenth aspect relates to the information processing system according to the seventh aspect, in which the one or more processors are configured to determine, for each imaging direction, an unnecessary imaging region with respect to the object, and determine the condition.

A fourteenth aspect relates to the information processing system according to the seventh aspect, in which the one or more processors are configured to determine the condition in a direction different from one direction of the imaging directions, based on the condition determined in the one direction of the imaging directions.

A fifteenth aspect relates to the information processing system according to the eighth aspect, in which the one or more processors are configured to extract a feature point of the object based on the pre-image, and determine the condition based on the feature point.

A sixteenth aspect relates to the information processing system according to the fifteenth aspect, in which the one or more processors are configured to determine, as the condition, a first focusing position of the image for creating the depth-of-field composite image based on the feature point.

A seventeenth aspect relates to the information processing system according to the seventh aspect, in which the one or more processors are configured to determine the condition based on a purpose of obtaining the 3D model.

An eighteenth aspect relates to the information processing system according to the seventh aspect, in which the one or more processors are configured to determine the condition based on distance information to the object.

A nineteenth aspect relates to a three-dimensional model generation device comprising an optical device capable of imaging an object, and an information processing device, in which the three-dimensional model generation device comprises one or more processors included in any of the optical device or the information processing device, and the one or more processors are configured to acquire two or more images having different focusing positions for each of a plurality of imaging directions of the object, generate a depth-of-field composite image by combining the images having different focusing positions acquired from the same imaging direction, and generate a 3D model of at least a part of the object based on the depth-of-field composite image obtained for each imaging direction.

A twentieth aspect relates to the three-dimensional model generation device according to the nineteenth aspect, in which the one or more processors are configured to determine whether to apply the image to the generation of the 3D model.

A twenty-first aspect relates to the three-dimensional model generation device according to the nineteenth or twentieth aspect, in which the one or more processors are configured to determine whether to apply the image to the generation of the depth-of-field composite image.

A twenty-second aspect relates to the three-dimensional model generation device according to any one of the nineteenth to twenty-first aspects, in which the one or more processors are configured to determine whether to apply the depth-of-field composite image to the generation of the 3D model.

A twenty-third aspect relates to the three-dimensional model generation device according to any one of the twentieth to twenty-second aspects, in which the one or more processors are configured to perform image evaluation for determining whether to apply the image.

A twenty-fourth aspect relates to the three-dimensional model generation device according to the twenty-third aspect, in which the one or more processors are configured to instruct re-imaging of the image based on a result of the image evaluation or the determination of whether to apply the image.

A twenty-fifth aspect relates to the three-dimensional model generation device according to any one of the nineteenth to twenty-fourth aspects, in which the one or more processors are configured to determine a condition for acquiring the images having different focusing positions of the object.

A twenty-sixth aspect relates to an optical device comprising one or more processors, the optical device being capable of capturing an object, in which the one or more processors are configured to acquire two or more images having different focusing positions for each of a plurality of imaging directions of the object, generate a depth-of-field composite image by combining the images having different focusing positions acquired from the same imaging direction, and generate a 3D model of at least a part of the object based on the depth-of-field composite image obtained for each imaging direction.

A twenty-seventh aspect relates to the optical device according to the twenty-sixth aspect, in which the one or more processors are configured to determine a condition for acquiring the images having different focusing positions of the object.

A twenty-eighth aspect relates to an information processing method executed by an information processing system including one or more processors, the information processing method including, by the one or more processors, acquiring images having different focusing positions of an object for a plurality of imaging directions, generating a depth-of-field composite image by combining the images having different focusing positions acquired from the same imaging direction, and generating a 3D model based on the depth-of-field composite image obtained for each imaging direction.

A twenty-ninth aspect relates to a program causing an information processing system including one or more processors to execute an information processing method, the program causing the one or more processors to acquire images having different focusing positions of an object for a plurality of imaging directions, generate a depth-of-field composite image by combining the images having different focusing positions acquired from the same imaging direction, and generate a 3D model based on the depth-of-field composite image obtained for each imaging direction.

### BRIEF DESCRIPTION OF THE DRAWINGS

FIG. 1 is a diagram showing an outline of a system that generates a 3D model.
FIG. 2 is a diagram showing an outline of a system different from FIG. 1 that generates a 3D model.
FIG. 3 is a block diagram showing a schematic configuration of a camera.
FIG. 4 is a block diagram showing a schematic configuration of a computer.
FIG. 5 is a flowchart showing a method of generating a three-dimensional model.
FIG. 6 is a diagram showing an example of FBK imaging.
FIG. 7 is a block diagram showing functions related to the generation of a depth-of-field composite image.
FIG. 8 is a block diagram showing functions related to the generation of a 3D model.
FIG. 9 is a flowchart showing a method of specifying an FBK image to be excluded.
FIG. 10 is a flowchart showing a method of specifying a depth-of-field composite image to be excluded.
FIG. 11 is a flowchart showing a method of generating a three-dimensional model including pre-imaging.
FIG. 12 is a diagram illustrating an example of condition setting of FBK imaging.
FIG. 13 is a diagram illustrating an example of thinning-out imaging.
FIG. 14 is a diagram showing an example of matching between an object and a static image (2D image).
FIG. 15 is a diagram illustrating a procedure of determining a condition of preferred other FBK imaging.
FIG. 16 is a diagram illustrating a procedure of determining a condition of preferred other FBK imaging.

### DESCRIPTION OF THE PREFERRED EMBODIMENTS

Hereinafter, preferred embodiments of the present invention will be described in detail with reference to the accompanying drawings.

### [Outline]

In 3D modeling by photogrammetry, it is desirable to image an object to be subjected to 3D modeling at a higher resolution and to have no shake or blur in the captured image.

In order to improve the quality of the 3D model to be created, a more detailed image (having a large number of pixels) is required, and the depth of field is shallow in a case in which the image is captured close to a subject using a wide-angle lens or a macro lens. In consideration of shake, a shutter speed is desirably fast. Since high-sensitivity noise affects the image quality of the 3D model, it is desirable to perform imaging at low sensitivity. Therefore, it is necessary to perform imaging with a small F-number (open side) in the end, and the imaging is performed under a condition in which the depth of field is shallow. Therefore, in order to create a better 3D model, it is necessary to capture an image to be used for depth-of-field composition at an optimal camera setting (imaging condition). However, in the current situation, it may take time to perform imaging itself, such as an increase in the number of captured images or a long time to set the imaging.

### <Embodiment>

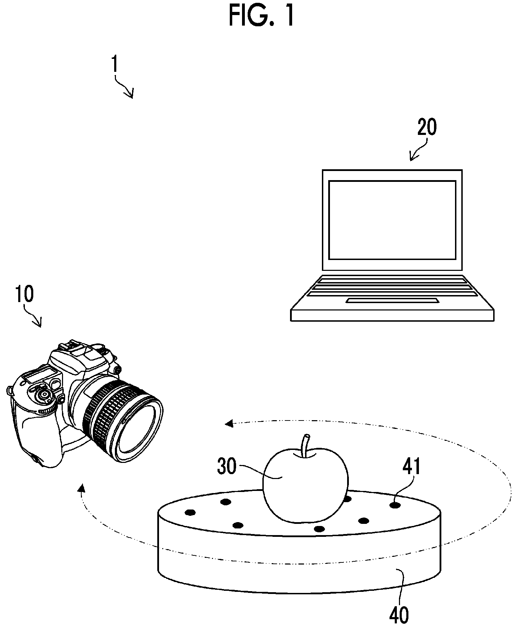

FIG. 1 is a diagram showing a system 1 that generates a 3D model according to the embodiment. The system 1 includes a camera 10 and a computer 20. An object 30 to be subjected to the 3D model is disposed on an imaging table 40.

The camera 10 can move around the object 30. The camera 10 is configured to image the object 30 from a plurality of directions in a case of moving around the object 30. In a case of generating a 3D model of the entire object 30, the camera 10 moves around the object 30 (for example, 360° or more). In a case of generating a 3D model of a part of the object 30, the camera 10 moves around a specific range (a range smaller than 360°) of the object 30. The camera 10 can be moved around the object 30 by a user holding the camera 10 or a moving object that supports the camera 10. The moving body is, for example, an arm attached to the imaging table 40. The arm is configured to be movable around the imaging table 40 by a motor or the like. In addition, in a case in which the object 30 is large, the moving object may be a vehicle or a drone.

The camera 10 is configured to capture an image of the object 30 at each position of the camera 10 while moving around the object 30. The camera 10 can capture a static image and a moving image. In addition, the camera 10 is configured to perform focus bracketing imaging (FBK imaging). The camera 10 can capture two or more images having different focusing positions with respect to one imaging direction of the object 30 by performing the FBK imaging. The image captured by the FBK imaging is referred to as an FBK image. The FBK imaging is imaging in which a plurality of images are acquired by moving a focusing position in one imaging direction.

The camera 10 can capture an image of the object 30 from a plurality of imaging directions. The camera 10 can capture two or more images having different focusing positions for each of the plurality of imaging directions. In addition, the camera 10 is configured to store an image of the object 30. The camera 10 is configured to image the object 30 in response to an instruction (operation) from the user, that is, manually or automatically. In addition, the camera 10 can comprise a distance measurement device that can measure a distance to the object 30.

The computer 20 includes a display and a keyboard. The display is an example of a display device that displays various types of information. The keyboard is an example of an input device through which the user can input an instruction. The computer 20 is configured to process various types of data including an image, input and output the various types of data, and store the various types of data. The computer 20 is configured to store a program or the like for executing a function and execute the program or the like.

The computer 20 is configured to perform depth-of-field composition on the FBK image acquired from the camera 10 by executing the program. The depth-of-field composition is a technique of combining a plurality of FBK images having different focusing positions to generate a composite image in which the entire object 30 is in focus.

The computer 20 is configured to generate a 3D model from a plurality of images of the object 30 by photogrammetry by executing the program. Photogrammetry is a technique of analyzing a plurality of images obtained by imaging the object 30 from different angles and combining the plurality of images to generate (restore) a three-dimensional shape or structure (3D model).

The object 30 is not particularly limited in shape and size as long as it is an object for which a 3D model is to be generated. The object 30 may be an object having a physical shape.

The imaging table 40 has a plurality of marks 41 on a placement surface (upper surface). The mark 41 is an indicator of the imaging direction. In addition, a distance between two of the marks 41 is a reference for a size in a case of creating the 3D model. The imaging table 40 has a cylindrical shape with a flat upper surface. The shape of the imaging table 40 is not limited as long as the object 30 can be placed on the imaging table 40. The imaging table 40 may be a rectangular parallelepiped. However, the imaging table 40 is not essential in a case of considering a condition such as a size of the object 30 and a location where the object 30 is disposed.

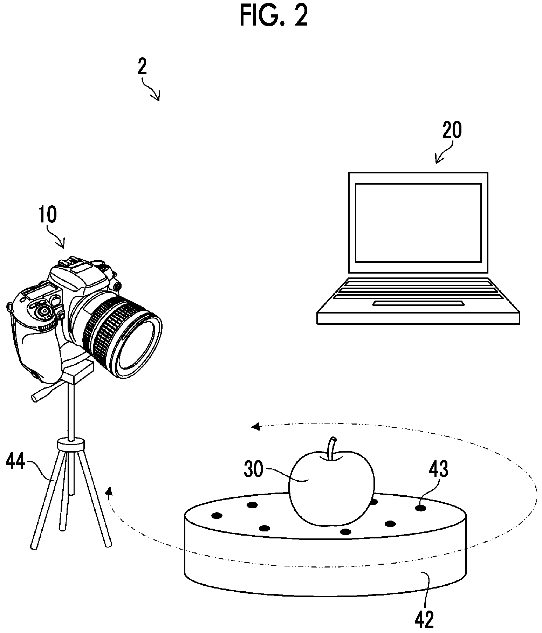

FIG. 2 is a diagram showing an outline of a system 2 that generates a 3D model different from the system 1. In FIG. 2, the same reference numerals are assigned to the same parts as the system 1 described above, and the description thereof will not be repeated. The system 2 of FIG. 2 includes the camera 10 and the computer 20. The camera 10 is fixed to a tripod 44 and is in a stationary state. The tripod 44 is an example of a support member that places the camera 10 in a stationary state.

The object 30 is disposed on an imaging table 42 having a mark 43. The imaging table 42 can be rotated unlike the imaging table 40 of the system 1. The imaging table 42 can rotate the object 30 at any angle.

In a case of generating a 3D model of the entire object 30, the imaging table 42 rotates the object 30 (for example, 360° or more). In a case of generating a 3D model of a part of the object 30, the imaging table 42 rotates the object 30 within a specific range (a range smaller than 360°). The imaging table 42 includes a motor or the like and can rotate at any speed.

The camera 10 is configured to capture an image of the object 30 at each position of the object 30 while the imaging table 42 rotates the object 30. The camera 10 can manually or automatically capture an image of the object 30 from a plurality of imaging directions.

The camera 10 and the computer 20 of the system 2 are basically the same as the camera 10 and the computer 20 of the system 1.

### [Camera]

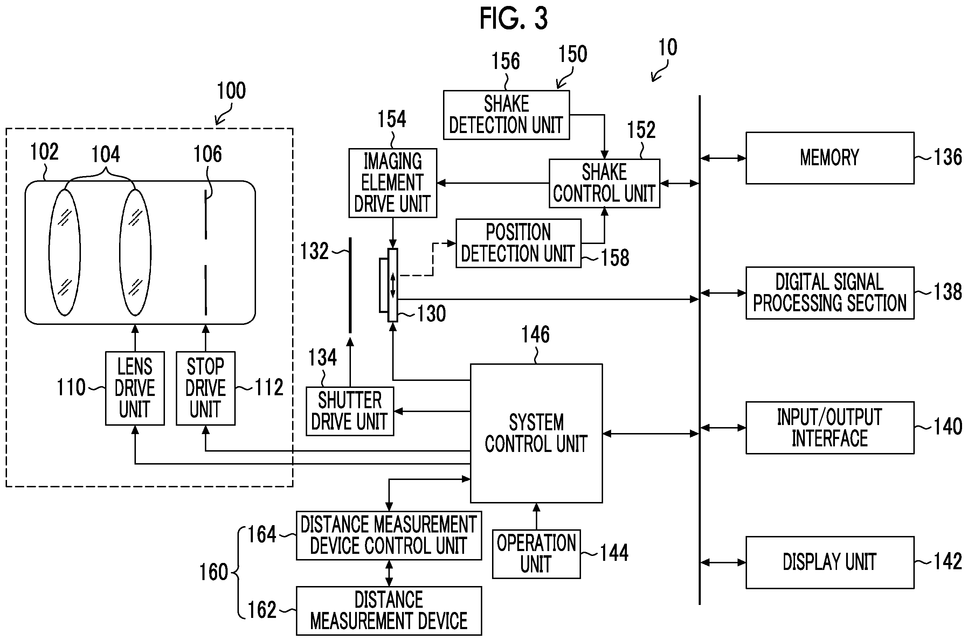

FIG. 3 is a block diagram showing a schematic configuration of the camera 10. As shown in FIG. 3, the camera 10 comprises a lens device 100. The lens device 100 includes an imaging optical system 102 including a lens group 104 and a stop 106, a lens drive unit 110, a stop drive unit 112, and the like.

The lens device 100 may be attachable to and detachable from the camera 10 or may be integrated with the camera 10.

The lens group 104 includes at least a focus lens that is movable in an optical axis direction. The focus lens is a lens for adjusting focus. The imaging optical system 102 adjusts focus by moving the focus lens back and forth along the optical axis. The focus lens is driven and operated by the lens drive unit 110. The focus lens can be moved to a focusing position at which the object 30 is in focus.

The stop 106 is composed of, for example, an iris stop. An amount of light passing through the imaging optical system 102 is adjusted by the stop 106. The stop 106 is operated by being driven by the stop drive unit 112.

As shown in FIG. 3, the camera 10 comprises an imaging element 130, a shutter 132, a shutter drive unit 134, a memory 136, a digital signal processing section 138, an input/output interface 140, a display unit 142, an operation unit 144, a system control unit 146, and the like.

The imaging element 130 is configured by, for example, a complementary mental-oxide semiconductor (CMOS) type image sensor having a predetermined color filter array (for example, a Bayer array or the like). In the camera 10 of the embodiment, the imaging element 130 is configured to include a drive unit, an analog to digital converter (ADC), a signal processing unit, and the like. In such a case, the imaging element 130 is operated by being driven by the built-in drive unit. Further, the signal of each pixel is converted into a digital signal by the built-in ADC. Furthermore, the signal of each pixel is subjected to processing such as correlation double sampling processing, gain processing, and correction processing by a built-in signal processing unit as necessary. The signal processing may be performed on an analog signal of each pixel or may be performed on a digital signal of each pixel.

The imaging element 130 can be configured by an image sensor such as an organic thin film imaging element, an XY address type, and a charged coupled device (CCD) type in addition to the CMOS type image sensor.

The shutter 132 is disposed between the stop 106 and the imaging element 130. The shutter 132 is operated by being driven by the shutter drive unit 134. The shutter drive unit 134 controls opening and closing of the shutter 132 and controls an exposure time (shutter speed) in the imaging element 130.

The memory 136 includes a flash memory, a read-only memory (ROM), a random access memory (RAM), an auxiliary storage device, and the like. The flash memory and the ROM store a camera control program, a program for performing imaging in a focus bracketing imaging mode, an image processing program, various types of data necessary for camera control, and the like. The RAM temporarily stores imaging data and functions as a work area for processing by the system control unit 146. In addition, the camera control program, the image processing program, and the like stored in the flash memory or the like are transitorily stored in the RAM. The system control unit 146 may include a part (RAM) of the memory 136.

The digital signal processing section 138 generates image data by performing signal processing such as offset processing, gamma correction processing, demosaic processing, and RGB/YCrCb conversion processing on the image obtained by imaging.

The input/output interface 140 includes a connection unit that can be connected to an external display device, a connection unit that can be connected to an external recording device, a card connection unit to which a memory card is attached and detached, a communication unit that can be connected to a network, and the like. For example, as the input/output interface 140, a universal serial bus (USB), a high-definition multimedia interface (HDMI) (HDMI is a registered trademark), or the like can be applied.

The display unit 142 is used as a playback monitor for playing back the captured image and as a live view monitor on which a live view image is displayed during imaging. Further, the display unit 142 is used as a monitor for setting in a case where various settings are made. The display unit 142 is configured with, for example, a display such as a liquid crystal display (LCD), an organic light-emitting diode (OLED) display, or the like.

The operation unit 144 is configured to include various operating members for operating the camera 10. The operating member includes various operation buttons in addition to a power button and a shutter button. The various operation buttons include a button for turning on and off a function of a shake correction mechanism 150. Further, in a case where the display unit 142 is composed of a display unit with a touch panel mounted thereon, the operating member constituting the operation unit 144 includes the touch panel. The operation unit 144 outputs a signal corresponding to the operation of each operating member to the system control unit 146. The user can set a condition of the FBK imaging from, for example, the operation unit 144.

The system control unit 146 performs overall control of the camera 10. Further, the system control unit 146 calculates various physical quantities required for control. The system control unit 146 is composed of, for example, a microcomputer which comprises a processor, a memory, and the like. For example, the processor is configured by a central processing unit (CPU) and the like. The system control unit 146 can execute a program for the FBK imaging. The system control unit 146 includes control of the shake correction mechanism 150, control of a distance measurement mechanism 160, and the like.

The camera 10 can comprise the shake correction mechanism 150. The shake correction mechanism 150 is a body image stabilizer (BIS) control type shake correction mechanism that performs shake correction by shifting (including rotation) the imaging element 130 in a plane orthogonal to the optical axis in a direction opposite to a shake direction. The shake correction mechanism 150 comprises a shake control unit 152, an imaging element drive unit 154, a shake detection unit 156, and a position detection unit 158.

The imaging element drive unit 154 can include an actuator that moves the imaging element 130. The shake detection unit 156 can include an acceleration sensor, a gyro sensor, and the like. The position detection unit 158 can include a Hall element that generates a voltage signal corresponding to a position of the imaging element 130. The shake control unit 152 controls the imaging element drive unit 154 based on a signal from the shake detection unit 156 and a signal from the position detection unit 158 to shift the imaging element 130 in a plane perpendicular to the optical axis to cancel the shake of the camera 10. The shake correction mechanism can be provided in the lens device 100.

The camera 10 can comprise the distance measurement mechanism 160. The distance measurement mechanism 160 can measure a distance or a direction to the object. The distance measurement mechanism 160 comprises a distance measurement device 162 and a distance measurement device control unit 164. The distance measurement device 162 is driven and operated by the distance measurement device control unit 164. The distance measurement mechanism 160 is, for example, light detection and ranging (LiDAR). The LiDAR comprises a laser light source and a light sensor. The LiDAR irradiates the object with laser light and detects the laser light reflected from the object 30 with the light sensor. The LiDAR measures a time taken until the laser light is reflected from the object 30. As a result, the LiDAR can measure the distance or the direction to the object 30. The camera 10 is an example of the optical device according to the embodiment of the present invention.

### [Computer]

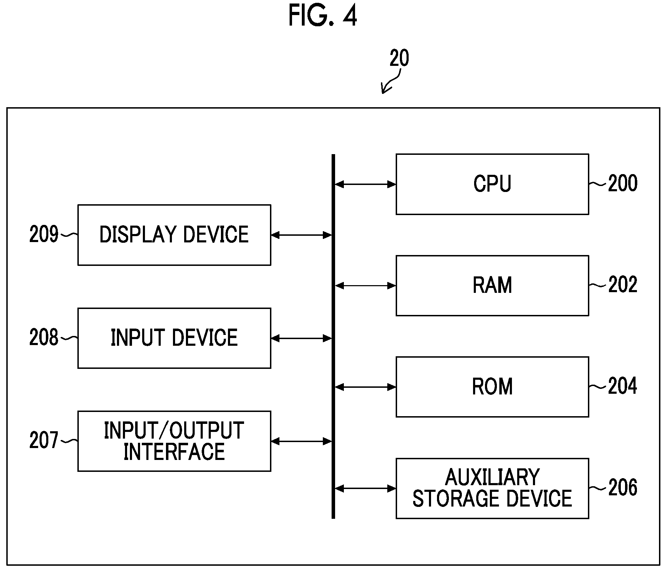

FIG. 4 is a block diagram showing an example of a hardware configuration of a computer 20. As shown in FIG. 4, the computer 20 is configured to include a CPU 200, a RAM 202, a ROM 204, an auxiliary storage device 206, an input/output interface (IF) 207, an input device 208, a display device 209, and the like. The ROM 204 and/or the auxiliary storage device 206 stores a program, which is executed by the CPU 200, and various types of data. The auxiliary storage device 206 is configured with, for example, a hard disk drive (HDD), a solid state drive (SSD), or the like. The input device 208 is configured with, for example, a keyboard, a mouse, and a touch panel. The display device 209 is configured as, for example, an LCD or an OLED. The image captured by the camera 10 is input to the computer 20 via the input/output interface 207 and is stored in, for example, the auxiliary storage device 206.

The computer 20 stores a program for generating a 3D model from a plurality of images of the object 30 in the auxiliary storage device 206. The CPU 200 can generate a 3D model by photogrammetry by executing the program.

### [Method of Generating Three-dimensional Model]

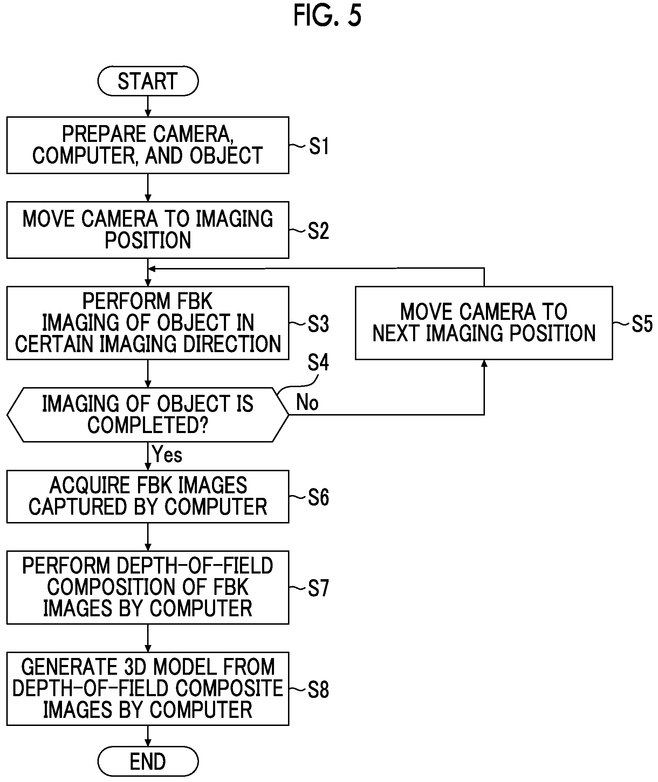

Next, a method of generating a three-dimensional model using the camera 10, the computer 20, and the imaging table 40 will be described. FIG. 5 is a flowchart showing a method of generating a three-dimensional model (information processing method).

As shown in FIG. 5, the user prepares the camera 10 that can perform the FBK imaging, the computer 20 that can perform the depth-of-field composition and the creation of the 3D model, and the object 30. The user installs the object 30 on the imaging table 40 (step S1).

The user moves to an imaging position for starting the imaging while holding the camera 10 (step S2). The user fixes the object 30 to the imaging table 40 and performs the FBK imaging of the image of the object 30 from each imaging direction while moving around the object 30 holding the camera 10. The user can arbitrarily determine the imaging position for starting the imaging. Here, the imaging position is denoted by P, and the specific imaging position is denoted by Pm (m is an integer). For example, P1 indicates an imaging start position.

The user performs the FBK imaging of the object 30 with the camera 10 at the imaging position (step S3). The user sets the camera 10 to a mode for two-dimensional image capturing for generating the 3D model. The user images the object 30 installed on the imaging table 40 from the imaging direction (θ1) at the imaging position (P1) in the imaging range of the camera 10. Here, the imaging direction is denoted by θ, and the imaging direction at the specific imaging position Pm is denoted by θm. The imaging direction (θm) is an angle representing a relative positional relationship between the camera 10 and the object 30 at the imaging position (Pm).

In a case in which the user half-presses the shutter button of the camera 10, the camera 10 sets the condition of the FBK imaging in the imaging direction from information on the imaging device of the camera 10 and an analysis result of the live view image.

Hereinafter, a step of automatically determining the condition setting of the FBK imaging by the camera 10 will be described. The system control unit 146 of the camera 10 analyzes the live view image to extract a region of the object 30. A known contour extraction process can be applied to the region extraction. The camera 10 may exclude a region outside the region of the object 30 from the processing target. By mask processing or masking, the region can be excluded from the processing target.

The focus lens of the camera 10 is moved to move the focusing position (focusing position), and a distance that is farthest from the camera 10 and a distance that is closest to the camera 10 in the contour at a time at which a contrast is maximized are obtained. As a result, the camera 10 acquires a distance between the camera 10 and the focusing position for focusing on the object 30 at the farthest point (referred to as a farthest focusing position distance) and a distance between the camera 10 and the focusing position for focusing on the object 30 at the closest point (referred to as a closest focusing position distance). In other words, the distance between the camera 10 and the focusing position at the closest point at which the focusing position is focused on a part of the object 30 and the distance on the same side at the farthest point are searched for while changing the focusing position. The closest focusing position at which the focusing position is not focused on any part of the object 30 and the farthest focusing position may be searched for.

The system control unit 146 calculates a width of the depth of field from the F-number setting of the lens group 104, the farthest focusing position distance, and the closest focusing position distance. Next, the system control unit 146 calculates the necessary focusing position and the number of times of imaging, and sets the imaging condition of the FBK imaging. In a case in which the setting of the imaging condition of the FBK imaging is completed, the camera 10 may notify the user of the completion of the setting.

In a case in which the user who has recognized that the imaging is possible fully presses the shutter button of the camera 10, the camera 10 executes the FBK imaging at the set focusing position and the set number of times of imaging. The system control unit 146 controls the lens drive unit to move the focus lens and captures images of the object 30 having two or more different focusing positions.

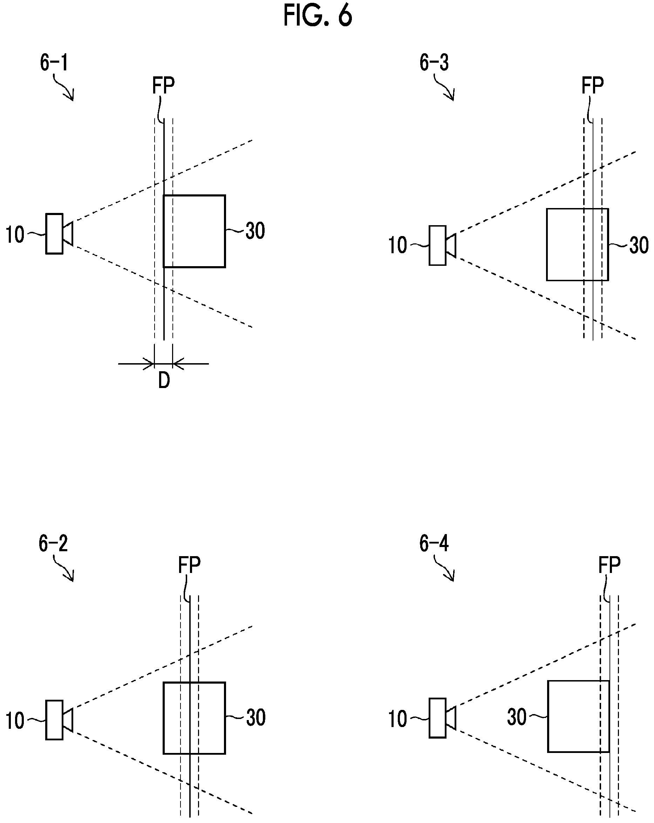

FIG. 6 is a diagram showing an example of the FBK imaging. FIG. 6 shows a case in which four images are captured by the FBK imaging from one imaging direction at the imaging position. FP indicates the focusing position, and D indicates the depth of field. 6-1 of FIG. 6 shows a case in which the focusing position of the captured image is the closest focusing position FP determined by the system control unit 146. 6-4 of FIG. 6 shows a case in which the focusing position of the captured image is the farthest focusing position determined by the system control unit 146.

As shown in 6-1 of FIG. 6, the focusing position is determined to be the closest focusing position, and the camera 10 captures the first image of the object 30. Next, as shown in 6-2 of FIG. 6, the camera 10 captures the second image of the object 30 at the next focusing position according to the imaging condition. The focusing positions of the second and subsequent images are calculated as the step amounts from the focusing position and the number of times of imaging by the system control unit 146.

Next, as shown in 6-3 of FIG. 6, the camera 10 captures the third image of the object 30 at the next focusing position. Finally, as shown in 6-4 of FIG. 6, the camera 10 captures the fourth image of the object 30 at the farthest focusing position and ends the FBK imaging. The camera 10 may notify the user that the FBK imaging is ended. As for movement of the focusing position, the focusing position can be moved randomly, even in a case where it is moved from the closest focusing position to the farthest focusing position or from the farthest focusing position to the closest focusing position.

The FBK image captured by the FBK imaging is stored in the memory 136 in association with the imaging direction (θ) and the number of images. For example, the imaging direction (θ) and the FBK image are stored in association with each other as Img(θ, 1), Img(θ, 2), Img(θ, 3), ..., and Img(θ, n) (n is an integer indicating the number of times of imaging).

In addition, the camera 10 may store information (meta information) on the imaging condition in a case of storing the image. The meta information can include imaging direction data with the object 30 acquired from the sensor of the camera 10. In a case in which the distance measurement mechanism 160 measures the distance to the object 30 in the imaging direction, the meta information can include the distance to the object 30.

Next, after step S3, it is determined whether the imaging of the object 30 is completed (step S4). In a case in which the imaging is not completed as a result of the determination (step S4: No), the camera 10 is moved to the next imaging position (P) (step S5). Then, the process returns to step S3, and the user performs the FBK imaging of the object 30 with the camera 10 in the imaging direction (θ) at the next imaging position (P) (step S3). The processing from step S3 to step S5 is repeatedly executed until the imaging of the object 30 is completed.

In step S4, the system control unit 146 may determine whether the imaging operation of the set imaging direction is completed. The system control unit 146 may display the image of which the imaging is already completed on the display unit 142 such that the user can easily determine.

On the other hand, in a case in which the imaging of the object 30 is completed (step S4: Yes), the camera 10 ends the FBK imaging.

Next, the computer 20 acquires two or more images (FBK images) having different focusing positions for each of the plurality of imaging directions of the object 30 stored in the camera 10 (step S6). The computer 20 acquires the FBK image from the memory 136 of the camera 10 via the input/output interface 207 by wire or wirelessly or from a recording medium such as a memory card.

All the FBK images are stored in the auxiliary storage device 206 of the computer 20, for example, in association with the imaging direction (θ) and the order of the images as shown in Table 1. In Table 1, the number of images in each imaging direction is n, but the number of images in each imaging direction may be different.

**[Table 1]**

| Imaging direction | FBK Images |
|---|---|
| θ1 | Img(θ1,1),Img(θ1,2)...Img(θ1,n) |
| θ2 | Img(θ2,1),Img(θ2,2)...Img(θ2,n) |
| ... | ... |
| θm | Img(θm,1),Img(θm,2)...Img(θm,n) |

Next, the computer 20 performs the depth-of-field composition on the FBK image for each imaging direction to generate the depth-of-field composite image for each imaging direction (step S7). The technology of the depth-of-field composition itself is a known technology. The brief overview of the processing is as follows.

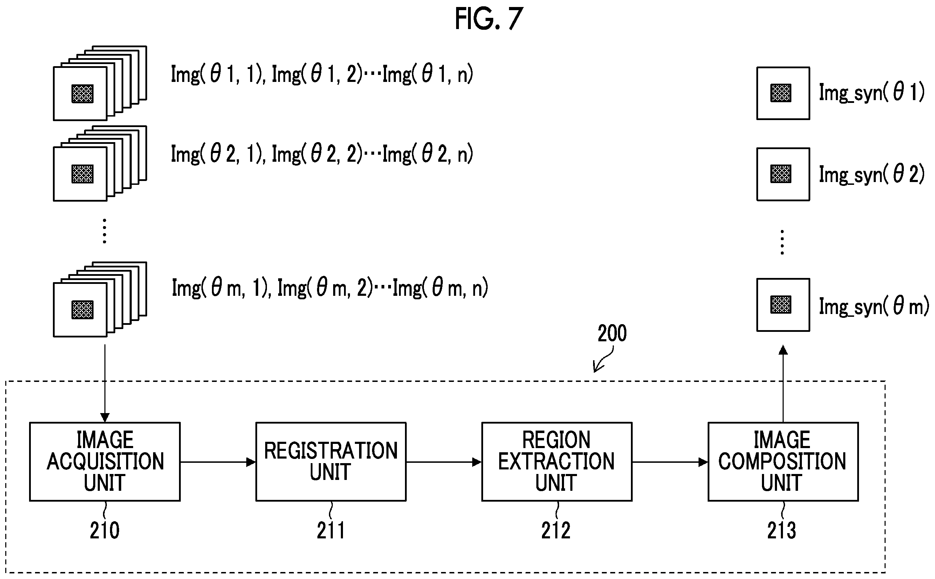

FIG. 7 shows a functional block of the CPU 200 related to the generation of the depth-of-field composite image. As shown in FIG. 7, the image acquisition unit 210 acquires all the FBK images (Img(θ1, 1), Img(θ1, 2), ..., Img(θ1, n), Img(θ2, 1), Img(θ2, 2), ..., Img(θ2, n), ..., Img(θm, 1), Img(θm, 2), ..., Img(θm, n)) for each imaging direction from the auxiliary storage device 206.

The registration unit 211 performs registration of a plurality of FBK images used for the depth-of-field composition for each imaging direction. For example, in a case in which a hand shake or the like occurs, the plurality of FBK images may be registered by performing a geometric transformation such as an affine transformation to be in the same coordinate system. Whether the hand shake occurs may be determined from information from the shake detection unit 156 of the camera 10.

The region extraction unit 212 of the CPU 200 extracts a pixel (focusing region) in focus from the FBK image (for example, Img(θ1, 1), Img(θ1, 2), ..., Img(θ1, n)) for each imaging direction. In a case in which the region in focus is extracted, the region extraction unit 212 extracts a region having the highest contrast value among regions corresponding to the same position in the plurality of FBK images in the imaging direction as the focusing region for generating the depth-of-field composite image.

The depth-of-field composite image generation unit 213 combines the focusing regions extracted from each FBK image to generate one depth-of-field composite image (Img_syn(θ1), Img_syn(θ2), ..., Img_syn(θm)) in focus over the entire image. A method of extracting the focusing region and a method of combining the focusing regions are not particularly limited, and known technologies can be applied. In a case in which the depth-of-field composition is completed for each imaging direction, the CPU 200 stores the depth-of-field composite image (Img_syn(θ1), Img_syn(θ2), ..., Img_syn(θm)) in the auxiliary storage device 206.

Next, the computer 20 generates the 3D model from the plurality of depth-of-field composite images (step S8). The technology of generating the 3D model by photogrammetry is a known technology. The brief overview of the processing is as follows.

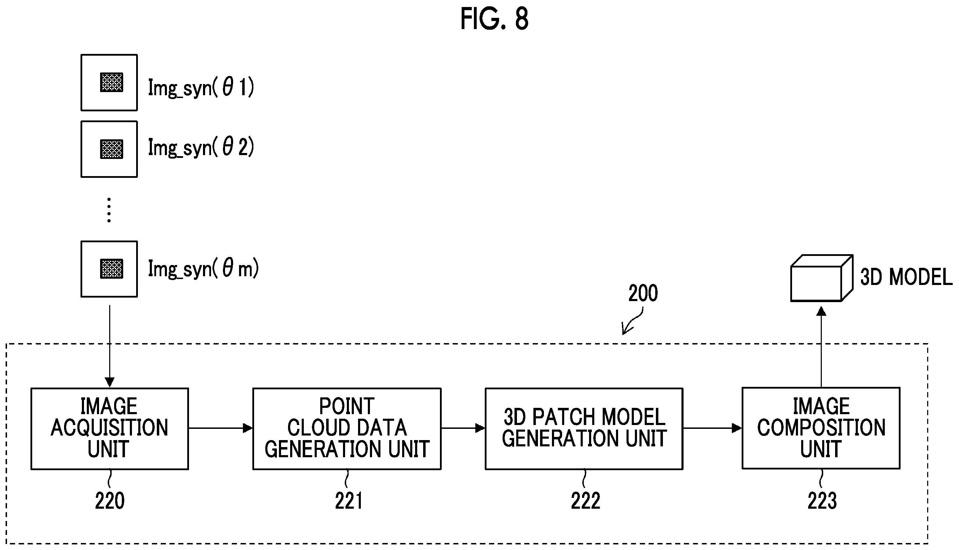

FIG. 8 shows a functional block of the CPU 200 related to the generation of the 3D model. As shown in FIG. 8, the image acquisition unit 220 acquires the depth-of-field composite image (Img_syn(θ1), Img_syn(θ2), ..., Img_syn(θm)) for each imaging direction from the auxiliary storage device 206.

The point cloud data generation unit 221 performs processing of analyzing the plurality of depth-of-field composite images to generate three-dimensional point cloud data of feature points. The point cloud data generation unit 221 extracts the feature points from each depth-of-field composite image. Next, the point cloud data generation unit 221 matches the corresponding feature points between the different depth-of-field composite images as corresponding points. The point cloud data generation unit 221 estimates camera parameters (for example, a fundamental matrix, an essential matrix, and internal parameters) of the camera and estimates the imaging position and the posture based on the estimated camera parameters. Then, three-dimensional positions of the feature points of the object 30 are obtained. Bundle adjustment is performed as necessary. The three-dimensional coordinates of the estimated feature points are combined to generate point cloud data (point cloud).

The 3D patch model generation unit 222 performs processing of generating a 3D patch model of the subject based on the three-dimensional point cloud data of the object 30 generated by the point cloud data generation unit 221. Specifically, a patch (mesh) is generated from the generated three-dimensional point cloud, and the 3D patch model is generated. Thus, the relief of the surface can be represented with a small number of points.

The 3D model generation unit 223 performs texture mapping on the 3D patch model generated by the 3D patch model generation unit 222 to generate a 3D model (three-dimensional model) to which the texture is applied. The 3D model generation unit 223 maps the texture to the mesh to apply a realistic appearance of the object 30 to the 3D patch model.

The data of the generated 3D model is stored in the auxiliary storage device 206 or the like. In addition, the data of the 3D model is displayed on the display device 209 as necessary.

In the embodiment, a case has been described in which the object 30 is installed on the imaging table 40 and the camera 10 moves around the object 30 in the system 1. The present invention is not limited to this, and the 3D model can be generated in the system 2.

In the embodiment, since the 3D model is generated by the photogrammetry from the plurality of depth-of-field composite images in focus from the front to the back of the object 30, a 3D model having high accuracy can be generated.

In a case of creating the 3D model, the distance information between the two marks 41 of the imaging table 40 can be used as a reference for the size of the 3D model. The position relationship between the camera 10 and the object 30 may be obtained based on the plurality of marks 41 of the imaging table 40, and the 3D model may be generated. The computer 20 is an example of the information processing system according to the present invention.

### [Preferred Embodiment]

Next, a preferred embodiment will be described. In the preferred embodiment, the computer 20 specifies the FBK image to be excluded in a case of generating the depth-of-field composite image. In addition, the computer 20 specifies the depth-of-field composite image to be excluded in a case of generating the 3D model.

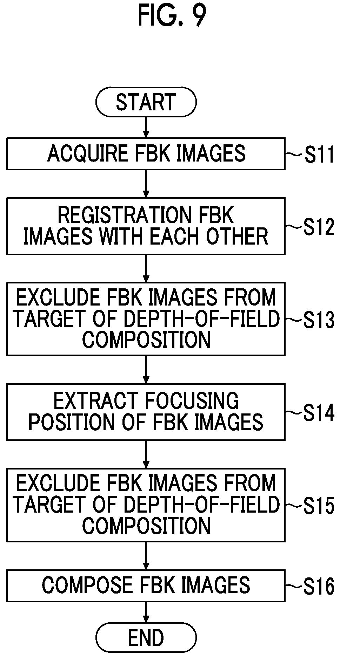

FIG. 9 is a flowchart showing a process of specifying the FBK image to be excluded in a case of generating the depth-of-field composite image. As shown in FIG. 9, the plurality of FBK images are acquired for each imaging direction (step S11). Specifically, the image acquisition unit 210 acquires the plurality of FBK images.

Next, the registration of the plurality of FBK images is performed for each imaging direction (step S12). Specifically, the registration unit 211 performs the registration. The registration is performed, for example, by selecting a reference image from the plurality of FBK images and extracting the feature point from the reference image. The corresponding point corresponding to the feature point of the reference image is tracked to determine which position it has moved to in the remaining FBK images. From the result, the remaining FBK images are subjected to parallel movement, rotation, and enlargement and reduction processing by an affine transformation or the like. The plurality of FBK images are registered. The registration in the FBK image can be performed even in a case in which a slight hand shake or the like occurs.

Next, the FBK image that cannot be registered is excluded from the target of the depth-of-field composition (step S13). Specifically, the registration unit 211 excludes the FBK image from the target of the depth-of-field composition. In step S12, the registration unit 211 can determine not to apply the FBK image that cannot be registered with the reference image to the depth-of-field composition. The registration unit 211 stores the information indicating that the FBK image is not applied to the depth-of-field composition in association with the FBK image in the auxiliary storage device 206.

Next, the region in focus is extracted from the FBK image (step S14). Specifically, the region extraction unit 212 extracts the region in focus from the FBK image. As described above, among the regions corresponding to the same position in the FBK image, the region having the highest contrast value is extracted as the focusing region for generating the depth-of-field composite image. However, the FBK image does not include the FBK image excluded from the target of the depth-of-field composition. The time for extracting the focusing position can be shortened.

Next, the FBK image from which the focusing position cannot be extracted is excluded from the target of the depth-of-field composition (step S15). Specifically, in step S14, the region extraction unit 212 can determine not to apply the FBK image from which the focusing position cannot be extracted to the depth-of-field composition (exclude). The region extraction unit 212 stores the information indicating that the FBK image is not applied to the depth-of-field composition in association with the FBK image in the auxiliary storage device 206.

Finally, the focusing regions extracted from each FBK image are combined to generate the depth-of-field composite image (step S16). Specifically, the depth-of-field composite image generation unit 213 generates the depth-of-field composite image. However, the FBK image does not include the FBK image excluded from the target of the depth-of-field composition in step S13 or step S15. In addition, the depth-of-field composite image generation unit 213 can extract the presence or absence of the hand shake (imaging condition) in the FBK image and exclude the image determined to have the hand shake from the target of the depth-of-field composition. Whether the hand shake occurs can be determined from a high-frequency component of the FBK image. In the step of excluding the FBK image from the target of the depth-of-field composition, it can be determined whether to exclude the FBK image based on the image evaluation of the FBK image.

By excluding the image that is not suitable for the depth-of-field composition, a high-quality depth-of-field composite image can be generated. Therefore, a high-quality 3D model can be generated from the high-quality depth-of-field composite image.

In the flow shown in FIG. 9, in a case in which the FBK image to be excluded from the target of the depth-of-field composition is determined, the computer 20 can also prompt the camera 10 to perform re-imaging. Information on the position and the posture of the camera 10 that has captured the FBK image can be acquired from the ancillary information or the like in a case in which the FBK image is acquired. The computer 20 can notify the user of the position and the posture of the camera 10. The user can easily know the location of the object 30 that requires the re-imaging of the FBK image.

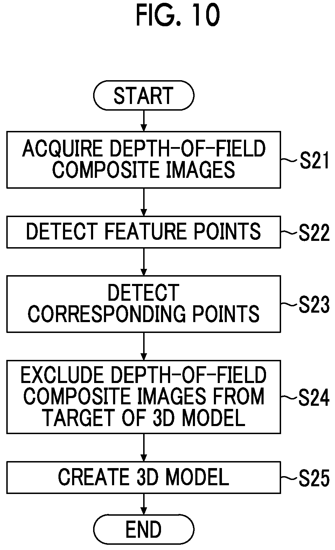

FIG. 10 is a flowchart showing a process of specifying the FBK image to be excluded in a case of generating the 3D model. As shown in FIG. 10, the depth-of-field composite image is acquired (step S21). Specifically, the image acquisition unit 220 acquires the plurality of depth-of-field composite images.

Next, the feature point is extracted from the plurality of depth-of-field composite images (step S22). The feature point is detected as the corresponding point from the plurality of depth-of-field composite images (step S23). Specifically, the point cloud data generation unit 221 extracts the feature point from the plurality of depth-of-field composite images and detects the feature point that matches as the corresponding point by comparing the feature points of the plurality of depth-of-field composite images.

Next, the depth-of-field composite image is excluded from the target of the 3D model (step S24). Specifically, the point cloud data generation unit 221 can determine not to apply the depth-of-field composite image from which the feature point cannot be extracted in step S22 or the depth-of-field composite image from which the corresponding point cannot be detected in step S23 to the 3D model. In addition, the point cloud data generation unit 221 can determine the image to be excluded from the target of the 3D model from the high-frequency component of the depth-of-field composite image. The point cloud data generation unit 221 stores the information indicating that the depth-of-field composite image is not applied to the generation of the 3D model in association with the depth-of-field composite image in the auxiliary storage device 206.

Next, the 3D model is generated from the depth-of-field composite image (step S25). Specifically, the point cloud data generation unit 221 combines the camera parameters of the camera, the imaging position and the posture, and the three-dimensional coordinates of the estimated feature points to generate the point cloud data from the depth-of-field composite image, and the 3D patch model generation unit 222 and the 3D model generation unit 223 generate the 3D model. However, the depth-of-field composite image does not include the depth-of-field composite image excluded from the target of the 3D model. Since the depth-of-field composite image that is not suitable for the generation of the 3D model is excluded, a high-quality 3D model can be generated.

In the flow shown in FIG. 10, in a case in which the depth-of-field composite image to be excluded from the target of the 3D model is determined, the computer 20 can also prompt the camera 10 to perform re-imaging. Information on the position and the posture of the camera 10 that has captured the FBK image applied to the depth-of-field composite image can be acquired from the ancillary information or the like in a case in which the depth-of-field composite image is acquired. The computer 20 can notify the user of the position and the posture of the camera 10. The user can easily know the location of the object 30 that requires the re-imaging of the FBK image necessary for generating the depth-of-field composite image.

### <Condition Setting of FBK Imaging>

A determination of the condition setting in a case of performing the FBK imaging will be described.

The depth of field (DOF) indicates a region within a certain range in front of and behind a position (focusing position) in focus in the captured image. In this range, the object is relatively clearly imaged. The image is in focus. On the other hand, the region outside the range is blurred, and the image is out of focus. The depth of field is a value that is physically and optically determined by a focal length of a lens, a pixel size (size of one pixel of an imaging element), an F-number (stop value) of a camera, a distance from a pixel sensor to the object 30 (focusing position), and an allowable circle of confusion. Therefore, the depth of field changes depending on the F-number and the distance between the object and the camera.

In the FBK imaging, the same object is imaged at a plurality of focusing positions to acquire a plurality of FBK images, and the plurality of FBK images are subjected to the depth-of-field composition to obtain an image (depth-of-field composite image) in which the depth of field is widened with respect to the object.

In the FBK imaging, in a case in which the imaging is performed at a plurality of focusing positions (assuming that the distance between the object and the camera is fixed), the depth of field is deep in a case in which the imaging is performed under an imaging condition in which the F-number is large (stopped-down state). As a result, the number of FBK images to be captured is reduced, so that the effort in the FBK imaging and the movement between the FBK images are reduced.

On the other hand, since the amount of light reaching the imaging element is reduced, it is necessary to perform the imaging under either of the following imaging conditions: (1) lengthening the shutter speed and suppressing high-sensitivity noise by not increasing the ISO sensitivity; or (2) shortening the shutter speed and, instead of keeping the ISO sensitivity low, increasing the ISO sensitivity to suppress the hand shake.

However, since (1) and (2) are trade-offs, the problem of the hand shake occurs in a case of (1), and the problem of the high-sensitivity noise occurs in a case of (2).

Further, the imaging environment also affects the imaging condition. For example, in an environment in which the illumination or the like is bright, the image quality is not affected even in a case in which the F-number is increased or the ISO sensitivity is decreased.

In the embodiment, the condition of the FBK imaging is set to reduce the effort of the imaging for each imaging direction and to maintain the quality of the generated 3D model. For example, the FBK imaging can be determined in consideration of the F-number, the ISO sensitivity, and the shutter speed.

In a case in which the depth of the object is short with respect to the imaging direction, the number of captured images is small even in a case in which the depth of field is slightly shallow (narrow width), and the effort can be reduced. Therefore, the computer 20 can set a setting in which the F-number is small, the shutter speed (exposure time) is short, and the ISO sensitivity is small as the condition of the FBK imaging. Examples of the condition for setting the condition of the FBK imaging include the depth of field in which the F-number is small, the shutter speed is short, and the ISO sensitivity is small within a range in which the number of captured images of the FBK image can be reduced.

The condition of the FBK imaging can be stored in the auxiliary storage device 206 of the computer 20 in a table in advance. In addition, an artificial intelligence (AI) model that has been trained by preparing learning data in a CPU of the computer 20 can be mounted, and learning can also be performed.

It should be noted that the description has been made on the premise that the FBK imaging is performed by changing the F-number and the like for each imaging direction. However, in a case in which the image quality and the like vary for each imaging direction, the quality of the generated 3D model may be affected. Therefore, pre-imaging may be performed before the FBK imaging to determine the common setting of the FBK imaging according to the object 30 (regardless of the imaging direction). In addition, the setting in which the FBK image obtained from each imaging direction is "best" may be set for each imaging direction. Alternatively, the setting in which the image obtained from each imaging direction is "best in total" may be "commonly" set. The setting of the FBK imaging can be appropriately determined based on the purpose of the 3D data generation.

In the condition setting of the FBK imaging, as another example, a beginner mode can be set. In the beginner mode, the F-number is increased to deepen the depth of field and reduce the number of captured images in order to reduce the effort of the imaging. On the other hand, the occurrence rate of the hand shake is higher than that of the advanced user. Therefore, a condition in which the shutter speed is increased even in a case in which the high-sensitivity noise occurs to some extent can be set as the condition of the FBK imaging.

In the condition setting of the FBK imaging, as another example, in a case in which it is found that the depth of the object 30 is short from any direction as a result of the pre-imaging, that is, the object 30 is small, the number of captured images does not increase even in a case in which the depth of field is shallow, so that the F-number can be reduced. Since the F-number can be reduced, the shutter speed can be shortened to prevent the hand shake. The ISO sensitivity can be reduced and the image quality can be increased from the brightness of the surrounding illumination. The condition of the FBK imaging can also be set to achieve the best balance.

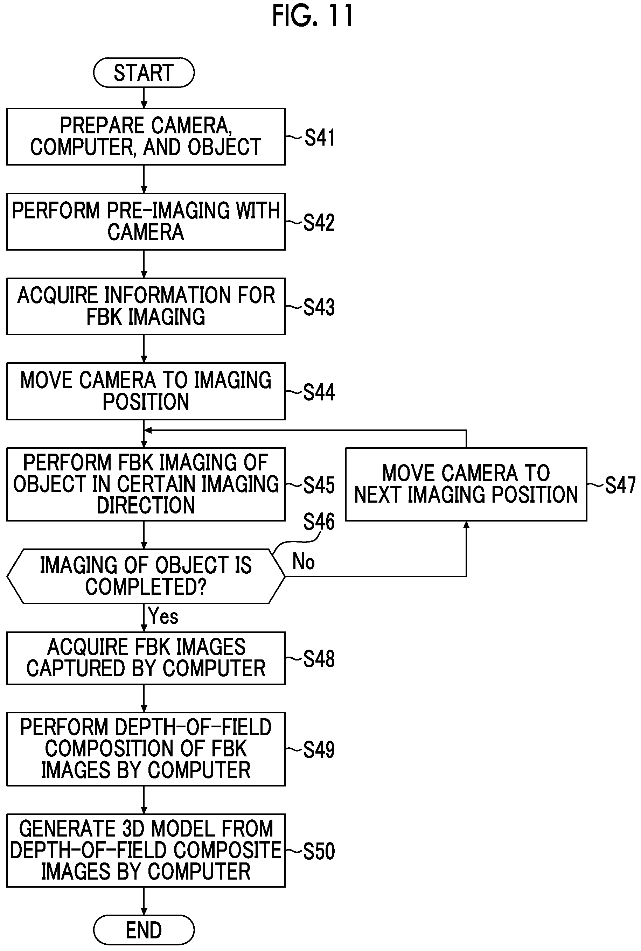

Next, a case in which the object 30 is pre-imaged by the camera 10 will be described. FIG. 11 is a flowchart showing a method of generating a three-dimensional model including pre-imaging.

The camera 10 that can perform the FBK imaging, the computer 20 that can perform the depth-of-field composition and the creation of the 3D model, and the object 30 are prepared. As shown in FIG. 11, the user installs the object 30 on the imaging table 40 (step S41).

The user moves to an imaging position for starting the pre-imaging while holding the camera 10, fixes the object 30 to the imaging table 40, and performs the pre-imaging of the image of the object 30 from each imaging direction while moving around the object 30 holding the camera 10 (step S42). The pre-imaging means imaging the object 30 before the FBK imaging (step S45). The pre-imaging may be a static image or a moving image of the object 30. In addition, the pre-image may be a live view image. The distance between the object 30 and the camera 10 can also be obtained.

Next, the computer 20 acquires the pre-image pre-imaged by the camera 10 and acquires information for determining the condition of the FBK imaging (step S43). Examples of the information that can be acquired include the position and the orientation of the camera 10 at a certain coordinate position and a pre-3D model of the object 30 pre-imaged. The pre-3D model means a 3D model generated before the 3D model is generated based on the pre-image. In a case in which the approximate size and the like of the object 30 can be understood, the accuracy of the 3D model generated in step S50 is not required for the pre-3D model. In a case of generating the pre-3D model, for example, in a case in which the imaging is desired to be performed quickly, it is preferable to use a parallax volume intersection method having fast processing. The technology of the parallax volume intersection method itself is a known technology, and is a technology of estimating the three-dimensional model based on information on the silhouette of the object 30. The acquired information is stored in the auxiliary storage device 206.

The user moves to an imaging position for starting the imaging while holding the camera 10 (step S44). The user performs the FBK imaging of the object 30 with the camera 10 at the imaging position (step S45). The pre-3D model acquired in step S43 has a completed three-dimensional actual shape. Therefore, the actual distance of the depth in a case in which the object 30 is viewed from each direction is obtained from the pre-3D model. In a case in which the user performs the FBK imaging of the object 30 from a certain direction, the condition of the FBK imaging (for example, the depth of field, the number of FBK images, and the like) can be automatically set based on these distances.

The distance to the object 30 is calculated by the CPU 200 of the computer 20. In addition, the setting of the FBK imaging is executed by the system control unit 146 (CPU) of the camera 10. However, the present invention is not limited thereto, and any of the CPU 200 or the system control unit 146 may execute the setting of the FBK imaging.

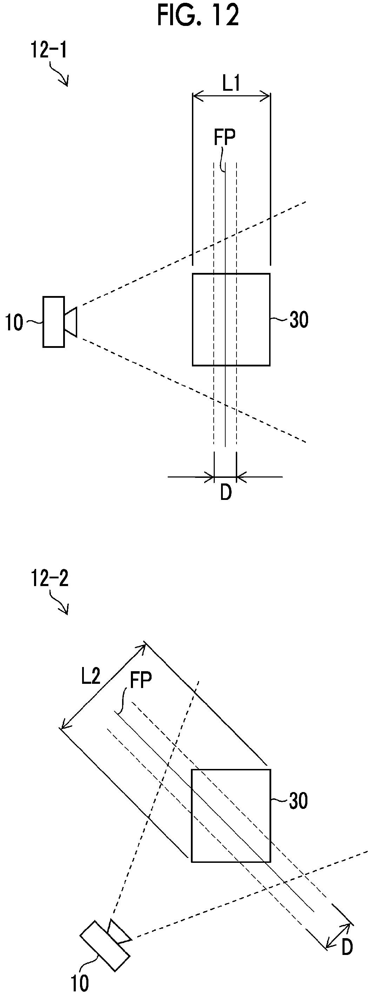

FIG. 12 is a diagram illustrating an example of the condition setting of the FBK imaging. The pre-3D model is generated before the FBK imaging. In 12-1 of FIG. 12, the distance L1 of the depth of the object 30 in this direction is acquired from the pre-3D model. Since the distance L1 is relatively short, the camera 10 or the computer 20 determines the condition such as the F-number, the ISO sensitivity, and the shutter speed at which the depth of field is shallow as the condition of the FBK imaging.

Similarly, in 12-2 of FIG. 12, the distance L2 of the depth of the object 30 in this direction is acquired from the pre-3D model. Since the distance L2 is relatively long, the camera 10 or the computer 20 determines the condition such as the F-number, the ISO sensitivity, and the shutter speed at which the depth of field is deep as the condition of the FBK imaging. With the condition of the FBK imaging, the number of FBK images can be reduced.

Although a case of obtaining the depth of the object 30 by the pre-3D model has been described, the depth of the object 30 in each direction can also be obtained from the pre-image (for example, a 2D image: a static image) or the like.

Next, thinning-out imaging of the FBK imaging will be described. The thinning-out imaging means not performing the FBK imaging from a certain imaging direction in a case of performing the FBK imaging from a plurality of imaging directions. By performing the thinning-out imaging, the number of times of the FBK imaging can be reduced, and the effort can be reduced.

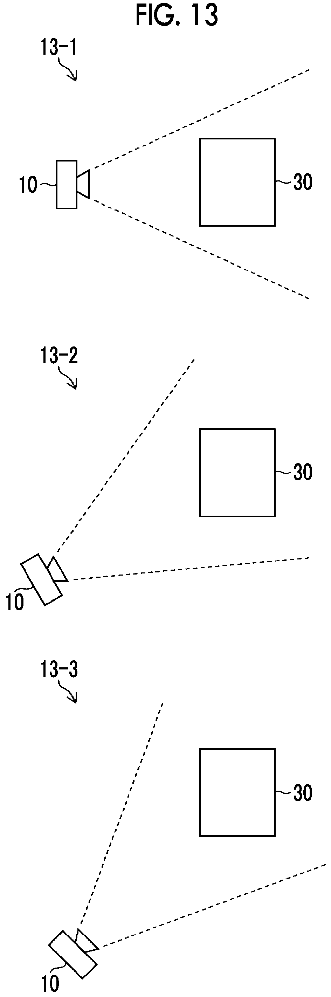

FIG. 13 is a diagram for describing an example of the thinning-out imaging. 13-1 of FIG. 13 shows a state in which the object 30 is imaged by the camera 10 from the first imaging direction by the FBK imaging. 13-2 of FIG. 13 shows a state in which the object 30 is imaged by the camera 10 from the second imaging direction different from the first imaging direction by the FBK imaging. 13-3 of FIG. 13 shows a state in which the object 30 is imaged by the camera 10 from the third imaging direction different from the first imaging direction and the second imaging direction by the FBK imaging.

For example, the camera 10 or the computer 20 can assume the FBK image obtained by the FBK imaging from the imaging direction shown in the first imaging direction (13-1) to the third imaging direction (13-3) based on the pre-imaging or the pre-3D model. It can be determined that the FBK image obtained in the second imaging direction (13-2) is included in the FBK image obtained in the first imaging direction (13-1) and the third imaging direction (13-3).

The camera 10 or the computer 20 can determine the FBK imaging of the object 30 from the second imaging direction (13-2) as an unnecessary imaging region. In addition, the camera 10 or the computer 20 can display the FBK image assumed to be acquired from the first imaging direction (13-1) to the third imaging direction (13-3) on the display device 209. The user can determine the unnecessary imaging region based on the assumed FBK image.

The camera 10 or the computer 20 can calculate the imaging coverage of the target region with respect to the object 30 based on the FBK image assumed to be acquired from the first imaging direction (13-1) to the third imaging direction (13-3). The condition of the FBK imaging can be determined based on the calculation result. For example, it can be determined whether the FBK image obtained in the second imaging direction (13-2) is included in the FBK image obtained in the first imaging direction (13-1) and the third imaging direction (13-3) from the imaging coverage. In a case in which sufficient FBK images can be acquired by the imaging from the first imaging direction (13-1) and the third imaging direction (13-3), the second imaging direction (13-2) can be excluded from the target of the FBK imaging. In addition, the number of FBK images in a case of performing the FBK imaging from the second imaging direction (13-2) can be reduced.

In a case in which the pre-imaging is executed or the pre-3D model is generated, it is preferable to image the object 30 with the camera 10 from the position and the direction of the pre-imaging in a case of performing the FBK imaging (step S45). As a result, it is easy to use the information on the pre-imaging or the pre-3D model.

In 13-1 to 13-3 of FIG. 13, a procedure of the thinning-out imaging in the FBK imaging has been described. Next, another procedure of determining the condition of the FBK imaging will be described using the same drawing. The FBK imaging is performed from the imaging direction shown in the first imaging direction (13-1) to the third imaging direction (13-3). First, the condition of the FBK imaging performed from the first imaging direction (13-1) is determined. Next, the condition of the FBK imaging performed from the second imaging direction (13-2) is determined. In this case, it can be determined that the second imaging direction (13-2) has not changed significantly with respect to the first imaging direction (13-1). As a result, the condition of the FBK imaging from the second imaging direction (13-2) can be made the same as the condition of the FBK imaging from the first imaging direction (13-1). The condition of the FBK imaging from the second imaging direction (13-2) can be determined without taking time.

On the other hand, it can be determined that the third imaging direction (13-3) has changed significantly with respect to the first imaging direction (13-1). The condition of the FBK imaging from the third imaging direction (13-3) is determined without being affected by the condition of the FBK imaging from the first imaging direction (13-1). That is, the condition of the FBK imaging in the different direction can be determined based on the condition of the FBK imaging determined in one direction of the imaging directions. Whether the change is significant can be determined by tracking the feature point or the like.

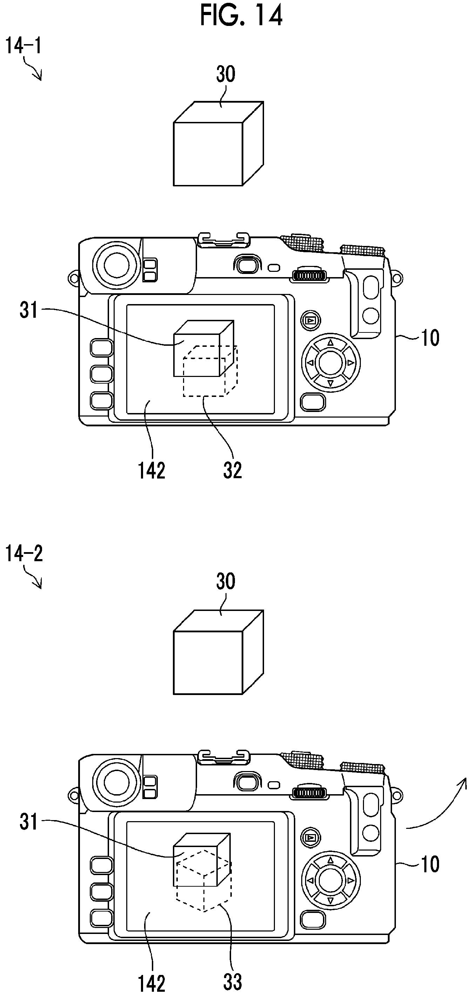

FIG. 14 is a diagram showing an example of matching between the object 30 and a static image (2D image).

For example, 14-1 of FIG. 14 shows a state in which the user is trying to perform the FBK imaging of the object 30 with the camera 10. A live view image 31 of the object 30 is displayed on the display unit 142 of the camera 10. The camera 10 stores the static image (2D image) captured for the pre-imaging or the pre-3D model in the memory 136. The camera 10 obtains and displays a 2D image 32 that is most similar to the image of the object 30 displayed in the live view image 31 by template matching. Information on the position and the direction of the camera 10 in a case of capturing the 2D image 32 is acquired. As a result, the distance between the current object 30 and the camera 10 can also be obtained, and the distance can be used in a case of determining the condition of the FBK imaging. Although the camera 10 displays the 2D image 32, the 2D image 32 may not be displayed in a case in which the user is notified of the completion of the template matching.

14-2 of FIG. 14 shows a state in which the user is trying to perform the FBK imaging of the object 30 with the camera 10. A live view image 31 of the object 30 is displayed on the display unit 142 of the camera 10. As shown in 14-2 of FIG. 14, the display unit 142 displays a contour of a 2D image 33. The 2D image 33 prompts the user to move in a direction (arrow direction) that matches the contour of the 2D image 33 with respect to the object 30. As a result, the distance between the current object 30 and the camera 10 can also be obtained, and the distance can be used in a case of determining the condition of the FBK imaging.

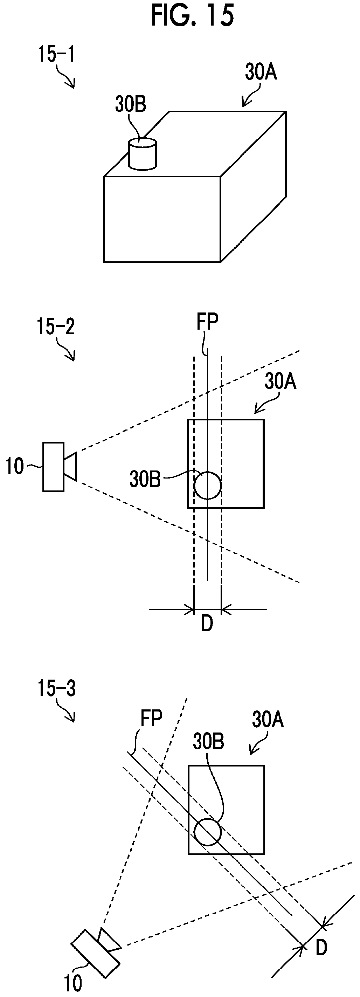

Next, the determination of the condition of the preferred other FBK imaging will be described. FIG. 15 is a diagram illustrating a procedure of determining the condition of the preferred other FBK imaging.

As shown in 15-1 of FIG. 15, the object 30A has a feature portion 30B unlike the object 30. As shown in 15-2 of FIG. 15, in the first imaging direction, the camera 10 extracts the feature portion 30B based on the live view image that is the pre-image, focuses on the feature portion 30B, and uses the position as a reference. The condition of the FBK imaging is determined by a method of shifting the focus position before and after the reference of the feature portion 30B.

Similarly, as shown in 15-3 of FIG. 15, in the second imaging direction, the camera 10 extracts the feature portion 30B based on the live view image that is the pre-image, focuses on the feature portion 30B, and uses the position as a reference. The condition of the FBK imaging is determined by a method of shifting the focus position before and after the reference of the feature portion 30B. That is, as the condition of the FBK imaging, the first focusing position of the FBK image for creating the depth-of-field composite image is determined to be the feature portion 30B. Since the feature portion 30B is an important element in a case of generating the 3D model, the first focusing position of the FBK image is set to the feature portion 30B, so that the depth-of-field composite image having high accuracy, which is important for generating the 3D model, can be acquired.

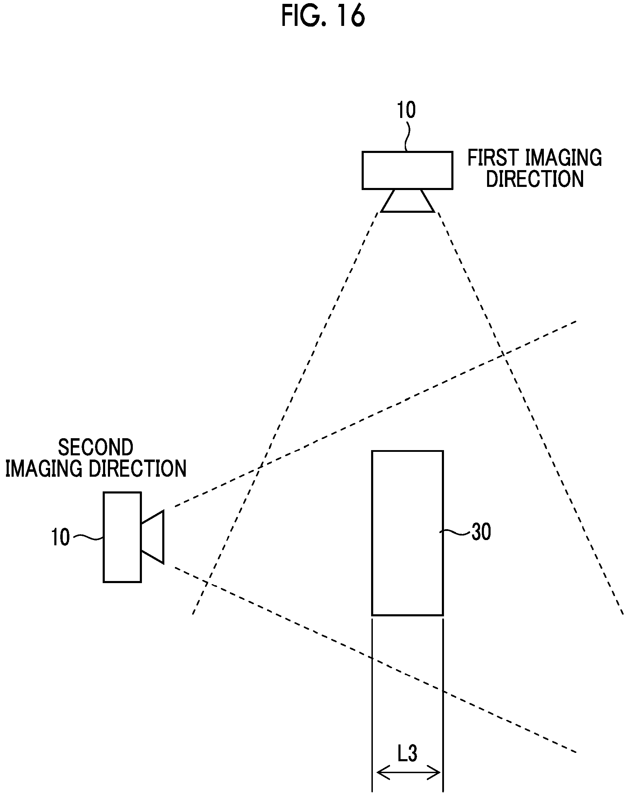

Next, the determination of the condition of the preferred other FBK imaging will be described. FIG. 16 is a diagram illustrating a procedure of determining the condition of the preferred other FBK imaging. In FIG. 16, the object 30 is imaged by the FBK imaging from the first imaging direction, and the object 30 is imaged by the FBK imaging from the second imaging direction. In a case of performing the FBK imaging from the first imaging direction, a distance L3 of the width of the object 30 can be acquired. Next, in a case of performing the FBK imaging from the second imaging direction, the number of times of imaging, the depth of field, the imaging interval, and the like of the FBK imaging can be determined by using the distance L3.

Returning to FIG. 11, after step S45, it is determined whether the imaging of the object 30 is completed (step S46). In a case in which the imaging is not completed as a result of the determination (step S46: No), the camera 10 is moved to the next imaging position (P) (step S47). The user performs the FBK imaging of the object 30 with the camera 10 in the imaging direction (θ) at the next imaging position (P) (step S45). The processing from step S45 to step S47 is repeatedly executed until the imaging of the object 30 is completed.

In a case in which the imaging of the object 30 is completed (step S46: Yes), the camera 10 ends the FBK imaging.

Next, the computer 20 acquires two or more images (FBK images) having different focusing positions for each of the plurality of imaging directions of the object 30 stored in the camera 10 (step S48).

Next, the computer 20 performs the depth-of-field composition on the FBK image for each imaging direction to generate the depth-of-field composite image for each imaging direction (step S49).

Next, the computer 20 generates the 3D model from the plurality of depth-of-field composite images (step S50). The processing ends in a case in which the generation of the 3D model is completed.

In the embodiment described above, the systems 1 and 2 that constitute the three-dimensional model generation device that generates the 3D model including the camera 10 and the computer 20 have been described. The camera 10 includes the system control unit 146, the computer 20 includes the CPU, and the functions of the system control unit 146 and the CPU 200 are not particularly limited. For example, the condition determination of the FBK imaging may be executed by any of the CPU 200 or the system control unit 146. That is, in a case in which the camera 10 and the computer 20 can generate the 3D model, any of the CPU 200 or the system control unit 146 may perform the functions.

In addition, the present invention includes an information processing system that generates a 3D model by the computer 20. In addition, the optical device includes the camera 10 that performs the FBK imaging, the depth-of-field composition of the FBK image, and the generation of the 3D model. The three-dimensional model generation device includes the camera 10 (optical device) and the computer 20 (information processing device). In addition, although a case of performing the FBK imaging with one camera 10 has been described as an example, the FBK imaging can also be performed by a plurality of cameras 10.

### [Configuration of System Control Unit 146 and CPU 200]

The functions of the system control unit 146 and the CPU 200 are implemented by various processors. The various types of processors include a CPU and/or a graphic processing unit (GPU), which is a general-purpose processor that executes a program to function as the various types of processing sections, a programmable logic device (PLD), which is a processor of which a circuit configuration can be changed after manufacture, such as a field programmable gate array (FPGA), and a dedicated electric circuit, which is a processor having a circuit configuration that is designed for dedicated use in order to perform specific processing, such as an application specific integrated circuit (ASIC). The program is synonymous with software.

One processing section may be configured with one of the various types of processors or may be configured with two or more processors of the same type or different types. For example, one processing section may be configured with a plurality of FPGAs or a combination of a CPU and an FPGA. In addition, one processor may constitute a plurality of processing sections. As an example in which a plurality of processing sections constitute one processor, first, there is a form in which one processor is configured with a combination of one or more CPUs and software as typified by a computer used in a client, a server, or the like, and this processor functions as the plurality of processing sections. Second, there is a form in which a processor that realizes functions of an entire system including the plurality of processing sections with one integrated circuit (IC) chip is used, as typified by a system on a chip (SoC) or the like. In this way, various processing units are configured using one or more of the various processors as the hardware structure.

The present invention has been described above, but it is obvious that the present invention is not limited to the above examples, and various improvements or modifications may be made within the scope of the present invention without departing from the gist thereof.

### Explanation of References

1: system
2: system
10: camera
20: computer
30: object
30A: object
30B: feature portion
31: live view image
32: 2D image
33: 2D image
40: imaging table
41: mark
42: imaging table
43: mark
44: tripod
100: lens device
102: imaging optical system
104: lens group
106: stop
110: lens drive unit
112: stop drive unit
130: imaging element
132: shutter
134: shutter drive unit
136: memory
138: digital signal processing section
140: input/output interface
142: display unit
144: operation unit
146: system control unit
150: shake correction mechanism
152: shake control unit
154: imaging element drive unit
156: detection unit
158: position detection unit
160: distance measurement mechanism
162: distance measurement device
164: distance measurement device control unit
200: CPU
202: RAM
204: ROM
206: auxiliary storage device
207: input/output interface
208: input device
209: display device
210: image acquisition unit
211: registration unit
212: region extraction unit
213: depth-of-field composite image generation unit
220: image acquisition unit
221: point cloud data generation unit
222: 3D patch model generation unit
223: 3D model generation unit
D: depth of field
FP: focusing position
L1: distance
L2: distance
L3: distance

## Claims

1. An information processing system comprising:
one or more processors,
wherein the one or more processors are configured to:
acquire two or more images having different focusing positions for each of a plurality of imaging directions of an object;
generate a depth-of-field composite image by combining the images having different focusing positions acquired from the same imaging direction; and
generate a 3D model of at least a part of the object based on the depth-of-field composite image obtained for each imaging direction.

2. The information processing system according to claim 1,
wherein the one or more processors are configured to determine whether to apply the image to the generation of the 3D model.

3. The information processing system according to claim 1,
wherein the one or more processors are configured to determine whether to apply the image to the generation of the depth-of-field composite image.

4. The information processing system according to claim 1,
wherein the one or more processors are configured to determine whether to apply the depth-of-field composite image to the generation of the 3D model.

5. The information processing system according to any one of claims 2 to 4,
wherein the one or more processors are configured to perform image evaluation for determining whether to apply the image.

6. The information processing system according to claim 5,
wherein the one or more processors are configured to instruct re-imaging of the image based on a result of the image evaluation or the determination of whether to apply the image.

7. The information processing system according to claim 1,
wherein the one or more processors are configured to determine a condition for acquiring the images having different focusing positions of the object.

8. The information processing system according to claim 7,
wherein the one or more processors are configured to determine the condition based on a pre-image obtained by imaging the object before the image is captured.

9. The information processing system according to claim 8,
wherein the one or more processors are configured to:
obtain a width of the object based on the pre-image; and
determine the condition based on the width.

10. The information processing system according to claim 8,
wherein the one or more processors are configured to obtain a pre-3D model of the object based on the pre-image and determine the condition based on the pre-3D model.

11. The information processing system according to claim 10,
wherein the one or more processors are configured to generate the pre-3D model by a volume intersection method.

12. The information processing system according to claim 7,
wherein the one or more processors are configured to:
calculate an imaging coverage of a target region with respect to the object for each imaging direction; and
determine the condition based on a calculation result.

13. The information processing system according to claim 7,
wherein the one or more processors are configured to:
determine, for each imaging direction, an unnecessary imaging region with respect to the object; and
determine the condition.

14. The information processing system according to claim 7,
wherein the one or more processors are configured to determine the condition in a direction different from one direction of the imaging directions, based on the condition determined in the one direction of the imaging directions.

15. The information processing system according to claim 8,
wherein the one or more processors are configured to:
extract a feature point of the object based on the pre-image; and
determine the condition based on the feature point.

16. The information processing system according to claim 15,
wherein the one or more processors are configured to determine, as the condition, a first focusing position of the image for creating the depth-of-field composite image based on the feature point.

17. The information processing system according to claim 7,
wherein the one or more processors are configured to determine the condition based on a purpose of obtaining the 3D model.

18. The information processing system according to claim 7,
wherein the one or more processors are configured to determine the condition based on distance information to the object.

19. A three-dimensional model generation device comprising:
an optical device capable of imaging an object; and
an information processing device,
wherein the three-dimensional model generation device comprises one or more processors included in any of the optical device or the information processing device, and the one or more processors are configured to:
acquire two or more images having different focusing positions for each of a plurality of imaging directions of the object;
generate a depth-of-field composite image by combining the images having different focusing positions acquired from the same imaging direction; and
generate a 3D model of at least a part of the object based on the depth-of-field composite image obtained for each imaging direction.

20. The three-dimensional model generation device according to claim 19,
wherein the one or more processors are configured to determine whether to apply the image to the generation of the 3D model.

21. The three-dimensional model generation device according to claim 19,
wherein the one or more processors are configured to determine whether to apply the image to the generation of the depth-of-field composite image.

22. The three-dimensional model generation device according to claim 19,
wherein the one or more processors are configured to determine whether to apply the depth-of-field composite image to the generation of the 3D model.

23. The three-dimensional model generation device according to any one of claims 20 to 22,
wherein the one or more processors are configured to perform image evaluation for determining whether to apply the image.

24. The three-dimensional model generation device according to claim 23,
wherein the one or more processors are configured to instruct re-imaging of the image based on a result of the image evaluation or the determination of whether to apply the image.

25. The three-dimensional model generation device according to claim 19,
wherein the one or more processors are configured to determine a condition for acquiring the images having different focusing positions of the object.

26. An optical device comprising:
one or more processors, the optical device being capable of capturing an object,
wherein the one or more processors are configured to:
acquire two or more images having different focusing positions for each of a plurality of imaging directions of the object;
generate a depth-of-field composite image by combining the images having different focusing positions acquired from the same imaging direction; and
generate a 3D model of at least a part of the object based on the depth-of-field composite image obtained for each imaging direction.

27. The optical device according to claim 26,
wherein the one or more processors are configured to determine a condition for acquiring the images having different focusing positions of the object.

28. An information processing method executed by an information processing system including one or more processors, the information processing method comprising, by the one or more processors:
acquiring images having different focusing positions of an object for a plurality of imaging directions;
generating a depth-of-field composite image by combining the images having different focusing positions acquired from the same imaging direction; and
generating a 3D model based on the depth-of-field composite image obtained for each imaging direction.

29. A program causing an information processing system including one or more processors to execute an information processing method, the program causing the one or more processors to:
acquire images having different focusing positions of an object for a plurality of imaging directions;
generate a depth-of-field composite image by combining the images having different focusing positions acquired from the same imaging direction; and
generate a 3D model based on the depth-of-field composite image obtained for each imaging direction.

30. A non-transitory computer-readable recording medium on which the program according to claim 29 is recorded.
